# EUROPEAN PATENT SPECIFICATION

(11) **EP 1 191 700 B1**
(45) Date of publication and mention of the grant of the patent: **27.06.2007**
(21) Application number: 00120714.1
(22) Date of filing: 22.09.2000
(51) Int. Cl.: H04B 1/10, H04Q 7/30

(54) **Radio base station with filter unit and method for filter adaptation**
Funkbasisstation mit Filtereinheit und Filteranpassungsverfahren
Station radio fixe avec unité de filtrage et méthode d'adaptation de filtre

(43) Date of publication of application: 27.03.2002
(73) Proprietor: TELEFONAKTIEBOLAGET LM ERICSSON (publ), 164 83 Stockholm (SE)
(72) Inventor: Hildebrand, Uwe, 91058 Erlangen (DE); Jeck, Michael, 90482 Nürnberg (DE); Unshelm, Thomas, 92259 Neukirchen b.S.R. (DE)
(74) Representative: Tonscheidt, Andreas

(56) References cited:
- WO-A-98/38821

## Description

### Technical field of the invention

The present invention relates to a method according to the preamble of claim 1. Devices and software programs embodying the invention are also described.

### Background

In mobile communication systems, wireless connections between user equipment, e.g. mobile phones, and a core network are established via radio base stations. The radio base stations are provided with antennas for the reception and transmission of radio signals on the wireless connections as well as with transmitters and receivers for the processing of the signals received and the processing of signals for transmission. Typically, a transmitter and a receiver are combined in a transceiver unit.

Usually at least one radio frequency filter is disposed in a connection between an antenna and a transmitter or receiver. Different filters can be used in the receive and transmit paths, i.e. in the connections of an antenna to a transmitter or receiver of the radio base station, respectively. The transmission characteristics of the filters are optimized for the radio signals which are transmitted or received, i.e. preferably signals in the frequency band of the transmitter or receiver are passed without attenuation while all other frequency bands are blocked. Because a close approximation of such an ideal behavior requires high efforts, customary filters generally have both a low attenuation in the pass band and residual transmissions outside.

Capacity demands in communication systems continuously increase and new functions are offered. Therefore, additional frequency bands are added to existing ones and new transmission standards are used by adding new types of radio base stations or upgrading existing radio base stations. Site acquisition costs for radio base stations are often high and a comparatively small number of sites simplifies the maintenance. It is preferable for these reasons to provide new functionality and increased capacity with radio base stations located on existing sites. Consequently, a co-siting of different types of base stations, i.e. older and new types, is necessary.

A co-siting is only possible if negative impacts on the radio performance of the respective other base stations on the site are minimized. Co-sited radio base stations can affect the radio performance of each other in different ways, especially if an older type of base station is not specified for co-siting with a newer type. Generally, the specifications of a base station only take into account a co-siting with a further radio base station using frequency bands or transmission standards which were considered when said specifications were defined. The filters in the receive and transmit paths determine the radio performance. An insufficiently adapted filter in a receive path can for example block intermodulation insufficiently. In a transmit path, spurious transmissions can be insufficiently blocked by a filter with comparatively low attenuation for the corresponding frequencies.

These problems can be avoided in different ways. A simple approach is to avoid problematic combinations of frequencies or transmission standards on a base station site. However, this requires a careful frequency planning in the network of an operator and results generally in a reduction of the maximum network capacity. Also the antenna installations can be modified to minimize negative impacts between the base stations on the site. This solution is expensive and not possible in all cases. As a further alternative, it is possible to provide the necessary filter performance in an older base station by installing additional fixed filters. Due to a high number of possible combinations this requires that a high number of different filters is available. All of the above solutions have the disadvantage that any subsequent change or addition of a radio base station on the site would require further adaptations of existing base stations.

International application WO 98/38821 concerns a wireless communication system with different subsystems. If a radio base station of one subsystem detects that a mobile station from a different subsystem is causing adjacent channel interference, the radio base station issues a command to the mobile station to adjust the spectral transmission characteristic. However, impacts between different radio base stations on the radio performance of the respective other radio base station are not considered.

### Summary and description of the invention

It is an object of the present invention to obviate the above disadvantages and provide a radio base station which can be adapted for co-siting in a simple way without reductions in the network capacity as well as a method to perform the adaptation. It is a further object, to describe a radio base station and a method which are advantageous for repeated adaptations of filtering characteristics. It is still another object to allow adaptations with a small number of different filter types.

According to the invention, the method described in claim 1 is performed. Furthermore, the invention is embodied in radio base stations and software units as described in claims 5, 8 and 13. Advantageous embodiments are described in the dependant claims.

The proposed method is suitable for a first and a second radio base station of a mobile communication system which are situated near each other, especially in close proximity on the same site. However, the term "near" denotes any arrangement of radio base stations in which they can influence the radio performance of each other. Especially for radio base stations with directional antennas as used for example near railways or highways, this can also be the case for base stations in a distance from each other

The method allows to adjust a filter in the second radio base station in an adaptive way. At least the second radio base station is provided with an adjustable filter in a connection between an antenna and a transmitter or receiver. The filter is for example a tunable analog filter or a configurable digital filter for radio frequencies.

Filter control signals are determined in the first radio base station. The filter control signals are for example commands or messages which specify parameters to which a filter is to be tuned, e.g. one or both edges of a pass band or the center frequency of a pass band. Alternatively, the control signals can comprise parameters of the first base station, e.g. frequency bands or modulation types in use, from which filter parameters are determined in the second radio base station. The former option of specifying parameters for the filter in the first radio base station has the advantage that in this way developments between the deployment of the first and second radio base station can be considered without the necessity to upgrade a control unit in the second radio base station.

The control signals are transmitted to a filter control unit in the second radio base station. The transmission can be performed over a suitable direct link between both radio base stations, e.g. an electrical or optical cable or a wireless link. The transmission can alternatively be performed via a common control node like a BSC (Base Station Controller) or RNC (Radio Network Controller) according to GSM (Global System for Mobile Communications) or UMTS (Universal Mobile Telecommunication System) specifications.

In the second radio base station, parameters of the filter are adjusted according to the control signals. If the control signals are commands, the commands are executed in a controller of the filter. Else a processing unit evaluates the information transmitted in the control signals and extracts the filter parameters or determines the filter parameters from parameters specifying radio characteristics of the first radio base station. The controller adjusts the filter accordingly.

It is possible that both the first and the second radio base station comprise adjustable filters which can be controlled as described above. This will especially be the case if a large percentage of radio base stations is provided with adjustable filters to allow for a co-siting with radio base stations according to future radio standards. Furthermore, a first radio base station can control more than one second radio base station.

The proposed method allows to adapt radio base stations for deployment near to each other, e.g. co-siting, especially of already installed base stations with newly developed types. The adaptation can be performed in a simple way for a large number of deployment scenarios without using a corresponding number of different filter types. Reductions in the network capacity due to alterations in frequency planning are avoided. For any subsequent changes in the radio base station deployment, the adaptation can be adjusted in a simple way.

The invention can be used for example for the co-siting of base stations for connections according to different standards like GSM, UMTS or IS 95. It can also be used for the co-siting of base stations with different frequency bands within a specification, e.g. GSM 400, GSM 900 or GSM 1800. The invention is applicable in scenarios with overlapping frequency bands, e.g. if a base station according to a first specification like GSM uses only one part of a specified frequency band while another part of said band is used by a radio base station according to a second specification, e.g. IS 95. The invention allows a simple reconfiguration of frequencies in the overlap region from transmissions according to one specification to the other if capacity demands change.

In a preferable embodiment of the invention, parameters of more than one filter are adjusted according to control signals. Often, a radio base station comprises more than one antenna or antenna system and several transceivers and correspondingly more than one adjustable filter. Every transmit and receive path in the radio base station can comprise an assigned filter. In these cases, filter control signals can for example specify frequency bands which must be blocked by all filters in the second radio base station or by a specific subgroup, e.g. by all filters in a receive path, all filters in a transmit path, all filters in a path for a specific transmission standard or any combinations of such subgroups.

The control signals are advantageously determined according to the type or frequency band of at least one of the radio base stations. A radio base station type generally corresponds to a frequency band or group of bands used for a specific transmission standard, e.g. to a frequency band as specified in Draft GSM 05.05 Version 8.3.0 (1999-12), European Telecommunications Standards Institute. Examples are GSM 450, 480 and 850, P-, E- and R-GSM 900, DCS 1800, PCS 1900 or combinations of such bands like GSM 400 or GSM900 or any other combination. Typically, a radio base station comprises at least one memory containing the radio base station type, e.g. in every transceiver. The transfer of the type parameter to a filter control unit and the evaluation is simple to implement. Furthermore, the configuration of the filter can be performed, e.g. for testing purposes, before the base station is configured by a superior node like an RNC.

Alternatively or in addition, present operating parameters of a radio base station can determine the control signals. Especially, the frequencies attributed within a frequency band to the first radio base station by a superior node or the modulation type of radio signals can be considered. This allows for a flexible adaptation of the filtering characteristics to the present operating conditions of the first radio base station.

Preferably, an adjustable filter is removable from the connection between the antenna and a transmitter or receiver. In this way, the insertion loss can be reduced if the filter is not necessary and removed from the connection> This is advantageous if the radio base station is prepared with the filter for co-siting but is presently not deployed near a further base station. Advantageously, the insertion and removal of the filter is performed according to control signals.

A first radio base station for a mobile communication system is provided with an interface to a second radio base station. The interface can correspond to a direct connection with the second radio base station or to a connection via one or more control nodes of the communication system. A controller in the first radio base station determines filter control signals according to at least one operating parameter of the first radio base station and transmits the control signals over the interface to the second radio base station as described with respect to the above methods. The operating parameters are preferably selected from a group comprising the type or a frequency band of at least one of the radio base stations and present operating parameters of at least one of the radio base stations.

An advantageous controller in the first radio base station controls also at least one filter in the first radio base station. In this way, a common control of radio frequency filters in both or several radio base stations is achieved.

A second radio base station for a mobile communication system comprises a transmitter, a receiver and an antenna connected to the transmitter, the receiver or both. An adjustable filter is disposed in the connection to the antenna. The filter is provided with a control unit for adjusting filtering parameters of the filter. The second radio base station is provided with an interface to a first radio base station and the control unit controls the filter according to control signals received over the interface from the first radio base station, e.g. by converting the control signals into a positioning signal for a stepper motor of the filter.

Generally, a radio base station can comprise both a controller and an adjustable filter, i.e. the same radio base station can be either the first or the second radio base station in the method. In this way it is possible to prepare any radio base station for a potential co-siting. Said radio base station can then control a filter in older types of co-sited radio base stations while later types of co-sited radio base stations can control filters in said radio base station.

A preferable second radio base station comprises more than one adjustable filter. Especially, an assigned filter can be used in every connection between a transmitter or receiver and an antenna. All or specified subgroups of the filters can be adjusted according to the control signals.

As an alternative to a filter which is permanently disposed in a connection between an antenna and transmitter or receiver, a preferable filter is removable from the connection. An advantageous filter can be switched in or passed by, either manually or, preferably, by control signals. In this way, the insertion loss can be reduced if the filter is not necessary and removed from the connection. A typical insertion loss is on the order of 0.5 dB. If the filter can be removed from the connection, it is possible to prepare any radio base station for co-siting with an adjustable filter. A corresponding insertion loss and radio performance degradation is avoided by the removal for cases in which the filter is not necessary, especially as long as only a single radio base station is located on a site or the stations on the site are of the same type.

In order to allow a simple transmission of the control signals between the radio base stations, a direct control link between them is proposed which can be e.g. an electrical or optical cable or a wireless link. The control link is preferably a serial link as the transmission speed can be low if no real-time requirements have to be considered. This is generally the case, because control signals need to be transferred only in few occasions, e.g. at the start-up of a radio base station or when frequency assignments are reconfigured.

A program unit according to the invention for a radio base station of a mobile communication system is adapted for adjusting a filter in a radio base station. It is generally part of the operating software of a radio base station and comprises code for reading parameters of a first radio base station. The first radio base station is preferably the radio base station in which the program unit is executed. In this case, parameters can for example be requested using a bus system connecting different units of the first radio base station. Else the parameters can be requested over an external link to a second radio base station or a node in the communication system. The program unit determines filter control signals for a filter control unit in a second radio base station which is provided with an adjustable filter, for example by selecting the control signals from a stored table which relates different types of radio base stations with parameters for the filter. The program unit transmits or initiates the transmission of filter control signals to a control unit of the adjustable filter in a suitable message format. The format can depend on the link between the processing system for executing the program unit and the control unit. The link is an external link if the program unit is executed in the first radio base station or else an internal link inside the second radio base station. The program unit can for example be stored on a data carrier or be directly loadable into the operating system of a radio base station. It can perform any steps of the above methods.

The foregoing and other objects, features and advantages of the present invention will become more apparent in the following detailed description of preferred embodiments as illustrated in the accompanying drawings.

### Brief description of the drawings

- Fig. 1: shows a pair of co-sited radio base stations according to the invention.
- Fig. 2: shows a flow chart of a method according to the invention.
- Fig. 3: shows a filter unit in a radio base station according to the invention.

### Detailed description of preferred embodiments of the invention

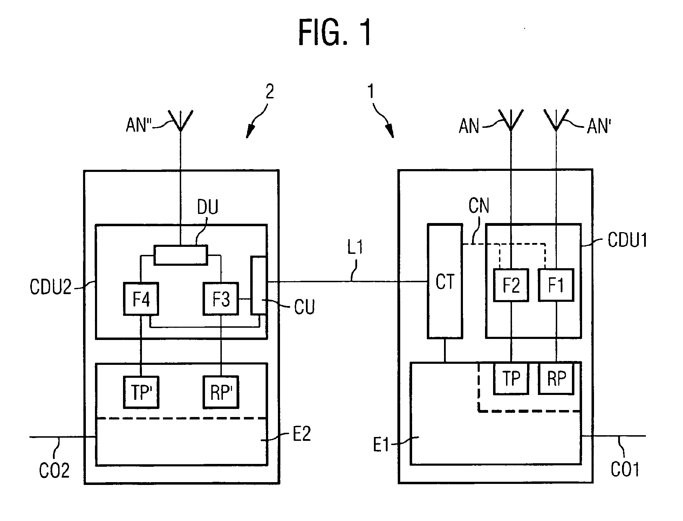

In figure 1, a pair of radio base stations 1, 2 according to the invention is depicted. Both radio base stations 1, 2 comprise a base station equipment E1, E2 including a transceiver unit indicated by broken lines. Every transceiver unit comprises a transmitter part TP and a receiver part RP. The transmitter part TP and receiver part RP are connected to an antenna AN. Different antennas can be used for transmission and reception as in the example of radio base station 1. Alternatively, the signals can be transmitted or received via the same antenna using a duplex unit DU as in radio base station 2. The antenna configurations shown are exemplary and both radio base stations 1, 2 can also have exchanged or still further antenna configurations or an identical antenna configuration. Furthermore, any of the individual antennas AN can be replaced by an antenna system with two or more antennas each, for example to attain a specific coverage in a cell corresponding to a radio base station.

The base station equipment E1, E2 includes a processing system for controlling the transceivers and forwarding payload and control information over connections CO1, CO2 to a core network interconnecting radio base stations with each other or further communication systems. In most cases, the base station equipment E1, E2 comprises several transceivers of which only one is depicted for simplicity.

In the connections between an antenna and a transceiver, a combining and distribution unit CDU1, CDU2 is disposed which can either comprise separate transmit and receive paths as in radio base station 1 or combines both paths in a duplex unit DU as in radio base station 2, depending on the antenna configuration used. In every transmit and receive path a filter F1 - F4 ensures that unwanted frequencies are blocked. While the filters F1, F2 in radio base station 1 can be either fixed or adjustable, the filters F3, F4 in radio base station 2 are adjustable. A control unit CU determines the filtering characteristics of the filters F3, F4, e.g. by adjusting the position of stepper motors. Alternatively to a common control unit CU for all filters in a combining and distribution unit CDU2, assigned control units for every filter F3, F4 are possible.

In the first radio base station 1, a controller CT is connected to the base station equipment E1. The controller CT comprises preferably hardware with a connection for a control link LI, although it is conceivable to implement the controller CT totally or in part as a software block executed in a processing system of radio base station 1, especially if the control link LI is a logical link via a network node. The controller CT determines the base station type of radio base station 1 by reading out a corresponding parameter from a memory in the base station equipment E1. Furthermore, the controller can read out present operating parameters of the radio base station 1, e. g. configured frequencies for the transmitter. From the parameters, the controller determines filter control signals.

The filter control signals are transmitted over the link LI to the control unit CU. On the control link LI signaling information for setting up and controlling a messaging sequence can be transmitted into which the control signals and, e.g., acknowledgements are included. Also parameters of the second radio base station 2 can be transmitted over the control link LI to the controller CT for evaluation in the determination of the control signals. The control unit CU adjusts the filter parameters according to the control signals. Preferably, the control unit CU has stored default settings to which the filters F3, F4 are tuned if no control signals are received, e.g. if no first radio base station 1 is connected to the second radio base station 2.

If the filters F1, F2 in the first radio base station 1 are tunable or can be passed by, they are optionally also controlled by controller CT as indicated by the connections CN.

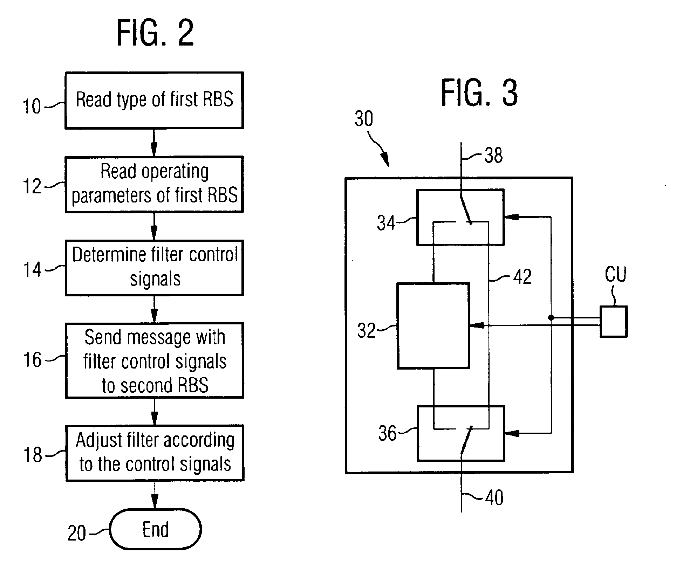

Figure 2 shows a flow diagram of the proposed method. In the example, the second radio base station is an already installed GSM radio base station equipped with tunable filters. At the same site a new wideband CDMA (code division multiple access) radio base station is installed which is the first radio base station. In a first step 10, a controller in the first radio base station reads the base station type from a memory in the base station equipment. In a further step 12, configured operating parameters like used frequency bands and used frequencies within these bands are read from the transceivers in the first radio base station. From these parameters, a determination 14 of filter control signals is performed. The determination 14 can for example comprise a selection of control signals from a look-up table or a calculation of parameters using stored equations. In following step 16, the determined control signals are encoded in a predefined format and transferred on a control link to the filter control unit in the second radio base station. At least one filter in the second radio base station is adjusted according to the control signals in step 18 before the end 20 of the procedure.

An advantageous filter unit 30 for a radio base station according to the invention is shown in figure 3. In addition to the adjustable radio frequency filter 32, the filter unit 30 includes two radio frequency switches 34, 36 with connections 38, 40 to the antenna system and transceiver. The switches 34, 36 can be operated simultaneously by control signals from the control unit CU. In this way, either the adjustable filter 32 or a bypass 42 can be switched into the connection between transceiver and antenna. When no filtering of the signals transmitted over the connection is required, the bypass 42 is inserted into the connection as depicted. In this way, losses due to the adjustable radio frequency filter 32 can be avoided.

The above embodiments admirably achieve the objects of the invention. However, it will be appreciated that departures can be made by those skilled in the art without departing from the scope of the invention which is limited only by the claims.

## Claims

1. Method for adjusting a filter (F3, F4, 32) in a radio base station (1, 2) of a mobile communication system with a first and a second radio base station (1, 2), wherein at least the second radio base station (2) is provided with an adjustable filter (F3, F4, 32) in a connection between an antenna (AN) and a transmitter or receiver, the method comprising the steps of
determining filter control signals in the first radio base station (1) according to at least one operating parameter of the first radio base station, transmitting the control signals to the second radio base station (2),
adjusting parameters of the filter (F3, F4, 32) in the second radio base station (2) according to the control signals.

2. Method according to claim 1, wherein parameters of more than one filter (F3, F4, 32) are adjusted according to control signals.

3. Method according to claim 1 or 2, wherein the control signals are determined according to the type and/or a frequency band of at least one of the radio base stations (1, 2) and/or present operating parameters of the second radio base station (1, 2).

4. Method according to any preceding claim, wherein a filter (F3, F4) is removable from the connection between the antenna and a transmitter or receiver.

5. Radio base station for a mobile communication system, wherein
the radio base station (1) is provided with an interface to a second radio base station (2) and with a controller (CT) which is adapted to determine filter control signals according to at least one operating parameter of the radio base station (1) and to transmit the control signals over the interface to the second radio base station (2).

6. Radio base station according to claim 5, wherein the controller (CT) determines the control signals according to the type and/or a frequency band of at least one of the radio base stations (1, 2) and/or present operating parameters of one of the radio base stations (1, 2).

7. Radio base station according to claim 5 or 6, wherein the controller (CT) controls at least one filter (F1, F2) in said radio base station (1).

8. Radio base station for a mobile communication system with a transmitter and/or receiver, an antenna (AN) and an adjustable filter (F3, F4, 32) in a connection between the transmitter or receiver and the antenna (AN), wherein the filter (F3, F4, 32) is provided with a control unit (CU) for adapting filtering parameters of the filter (F3, F4, 32),
the radio base station (2) is provided with an interface to a first radio base station (1)
and the control unit (CU) is adapted to control the filter (F3, F4, 32) according to control signals received from the first radio base station (1) and determined according to at least one operating parameter of the first radio base station.

9. Radio base station according to claim 8, wherein the radio base station (2) comprises more than one adjustable filter (F3, F4, 32).

10. Radio base station according to claim 8 or 9, wherein a filter (F3, F4, 32) is removable from the connection between the antenna (AN) and a transmitter or receiver.

11. Radio base station according to any of the claims 5 to 10, wherein the control signals are transmitted over a control link (LI).

12. Radio base station according to claim 11, wherein the control link (LI) is a serial link.

13. Program unit on a data carrier or loadable into a radio base station (1, 2) of a mobile communication system, the program unit being adapted for adjusting a filter (F3, F4, 32) in a radio base station (2) and comprising code for performing the steps of
reading parameters of a first radio base station (1),
determining filter control signals for a filter control unit (CU) in a second radio base station (2) which is provided with an adjustable filter (F3, F4, 32) initiating the transmission of the filter control signals to the filter control unit (CU).

14. Program unit according to claim 13, wherein the program unit performs at least one step of a method according to any of the claims 2 to 4.

## Patentansprüche

1. Verfahren zum Einstellen eines Filters (F3, F4, 32) in einer Funkbasisstation (1, 2) eines Mobilkommunikationssystems mit einer ersten und einer zweiten Funkbasisstation (1, 2), wobei mindestens die zweite Funkbasisstation (2) mit einem einstellbaren Filter (F3, F4, 32) in einer Verbindung zwischen einer Antenne (AN) und einem Sender oder Empfänger ausgestattet ist, wobei das Verfahren die folgenden Schritte umfasst:
Bestimmen von Filtersteuersignalen in der ersten Funkbasisstation (1) entsprechend wenigstens einem Betriebsparameter der ersten Funkbasisstation,
Übertragen der Steuersignale zu der zweiten Funkbasisstation (2),
Einstellen von Parametern des Filters (F3, F4, 32) in der zweiten Funkbasisstation (2) entsprechend den Steuersignalen.

2. Verfahren nach Anspruch 1, wobei Parameter mehr als eines Filters (F3, F4, 32) entsprechend den Steuersignalen eingestellt werden.

3. Verfahren nach Anspruch 1 oder 2, wobei die Steuersignale entsprechend dem Typ und/oder einem Frequenzbereich mindestens einer der Funkbasisstationen (1, 2) und/oder vorliegenden Betriebsparametern der zweiten Funkbasisstation (1, 2) bestimmt werden.

4. Verfahren nach einem der vorhergehenden Ansprüche, wobei ein Filter (F3, F4) aus der Verbindung zwischen der Antenne und einem Sender oder Empfänger ausbaubar ist.

5. Funkbasisstation für ein Mobilkommunikationssystem, wobei die Funkbasisstation (1) mit einer Schnittstelle zu einer zweiten Funkbasisstation (2) ausgestattet ist, und mit einer Steuereinrichtung (CT), welche dazu vorgesehen ist, Filtersteuersignale entsprechend mindestens einem Betriebsparameter der Funkbasisstation (1) zu bestimmen und die Steuersignale über die Schnittstelle zu der zweiten Funkbasisstation (2) zu übertragen.

6. Funkbasisstation nach Anspruch 5, wobei die Steuereinrichtung (CT) die Steuersignale entsprechend dem Typ und/oder einem Frequenzbereich mindestens einer der Funkbasisstationen (1, 2) und/oder vorliegenden Betriebsparametern einer der Funkbasisstationen (1, 2) bestimmt.

7. Funkbasisstation nach Anspruch 5 oder 6, wobei die Steuereinrichtung (CT) mindestens ein Filter (F1, F2) in der Funkbasisstation (1) steuert.

8. Funkbasisstation für ein Mobilkommunikationssystem mit einem Sender und/oder Empfänger, einer Antenne (AN) und einem einstellbaren Filter (F3, F4, 32) in einer Verbindung zwischen dem Sender oder Empfänger und der Antenne (AN), wobei das Filter (F3, F4, 32) mit einer Steuereinheit (CU) zum Anpassen von Filterparametern des Filters (F3, F4, 32) ausgestattet ist,
die Funkbasisstation (2) mit einer Schnittstelle zu einer ersten Funkbasisstation (1) ausgestattet ist,
und die Steuereinheit (CU) dazu vorgesehen ist, das Filter (F3, F4, 32) entsprechend Steuersignalen zu steuern, die von der ersten Funkbasisstation (1) empfangen wurden und entsprechend mindestens einem Betriebsparameter der ersten Funkbasisstation bestimmt wurden.

9. Funkbasisstation nach Anspruch 8, wobei die Funkbasisstation (2) mehr als einstellbares Filter (F3, F4, 32) umfasst.

10. Funkbasisstation nach Anspruch 8 oder 9, wobei ein Filter (F3, F4, 32) aus der Verbindung zwischen der Antenne (AN) und einem Sender oder Empfänger ausbaubar ist.

11. Funkbasisstation nach einem der Ansprüche 5 bis 10, wobei die Steuersignale über eine Steuerverbindung (LI) übertragen werden.

12. Funkbasisstation nach Anspruch 11, wobei die Steuerverbindung (LI) eine serielle Verbindung ist.

13. Programmeinheit, die sich auf einem Datenträger befindet oder in eine Funkbasisstation (1, 2) eines Mobilkommunikationssystems ladbar ist, wobei die Programmeinheit zum Einstellen eines Filters (F3, F4, 32) in einer Funkbasisstation (2) vorgesehen ist und Code zum Ausführen der folgenden Schritte umfasst:
Lesen von Parametern einer ersten Funkbasisstation (1),
Bestimmen von Filtersteuersignalen für eine Filtersteuereinheit (CU) in einer zweiten Funkbasisstation (2), welche mit einem einstellbaren Filter (F3, F4, 32) ausgestattet ist,
Initiieren der Übertragung der Filtersteuersignale zu der Filtersteuereinheit (CU).

14. Programmeinheit nach Anspruch 13, wobei die Programmeinheit mindestens einen Schritt eines Verfahrens nach einem der Ansprüche 2 bis 4 ausführt.

## Revendications

1. Procédé pour régler un filtre (F3,F4,32) dans une station de base radio (1,2) d'un système de communication mobile comportant une première et une seconde station de base radio (1,2), moyennant quoi au moins la seconde station de base radio (2) est pourvue d'un filtre réglable (F3,F4,32) dans une connexion entre une antenne (AN) et un émetteur ou un récepteur, le procédé comprenant les étapes consistant à :
déterminer des signaux de commande du filtre dans la première station de base radio (1) en fonction d'au moins un paramètre de fonctionnement de la première station de base radio,
transmettre les signaux de commande à la seconde station de base radio (2),
régler les paramètres du filtre (F3,F4,32) dans la seconde station de base radio en fonction des signaux de commande.

2. Procédé selon la revendication 1, dans lequel les paramètres de plus d'un filtre (F3,F4,32) sont réglés en fonction des signaux de commande.

3. Procédé selon la revendication 1 ou 2, dans lequel les signaux de commande sont déterminés en fonction du type et/ou d'une bande de fréquence d'au moins une des stations de base radio (1,2) et/ou des paramètres de fonctionnement actuels de la seconde station de base radio (1,2).

4. Procédé selon une des revendications précédentes, dans lequel un filtre (F3,F4) peut être retiré de la connexion entre l'antenne et un émetteur ou récepteur.

5. Station de base radio pour un système de communication mobile, moyennant quoi la station de base radio (1) est pourvue d'une interface avec une seconde station de base radio (2) et avec un contrôleur (CT) qui est adapté afin de déterminer les signaux de commande du filtre en fonction d'au moins un paramètre de fonctionnement de la station de base radio (1) et de transmettre les signaux de commande par l'intermédiaire de l'interface vers la seconde station de base radio (2).

6. Station de base radio selon la revendication 5, dans laquelle le contrôleur (CT) détermine les signaux de commande en fonction du type et/ou d'une bande de fréquence d'au moins une des stations de base radio (1,2) et/ou des paramètres de fonctionnement actuels d'une des stations de base radio (1,2).

7. Station de base radio selon la revendication 5 ou 6, dans laquelle le contrôleur (CT) commande au moins un filtre (F1,F2) dans ladite station de base radio (1).

8. Station de base radio pour un système de communication mobile comportant un émetteur et/ou un récepteur, une antenne (AN) et un filtre réglable (F3,F4,32) dans une connexion entre l'émetteur ou le récepteur et l'antenne (AN),
dans laquelle le filtre (F3,F4,32) est pourvu d'une unité de commande (CU) pour adapter les paramètres de filtrage du filtre (F3,F4,32),
la station de base radio (2) est pourvue d'une interface avec une première station de base radio (1),
et l'unité de commande (CU) est adaptée afin de commander le filtre (F3,F4,32) en fonction des signaux de commande reçus depuis la première station de base radio (1) et déterminés en fonction d'au moins un paramètre de fonctionnement de la première station de base radio.

9. Station de base radio selon la revendication 8, moyennant quoi la station de base radio (2) comprend plus d'un filtre réglable (F3,F4,32).

10. Station de base radio selon la revendication 8 ou 9, dans laquelle un filtre (F3,F4,32) peut être retiré de la connexion entre l'antenne (AN) et un émetteur ou récepteur.

11. Station de base radio selon une quelconque des revendications 5 à 10, dans laquelle les signaux de commande sont transmis par l'intermédiaire d'une liaison de commande (LI).

12. Station de base radio selon la revendication 11, dans laquelle la liaison de commande (LI) est une liaison en série.

13. Unité de programme sur un support de données ou chargeable dans une station de base radio (1,2) d'un système de communication mobile, l'unité de programme étant adaptée pour :
régler un filtre (F3,F4,32) dans une station de base radio (2) et comprenant du code pour effectuer les étapes consistant à :
lire des paramètres d'une première station de base radio (1),
déterminer des signaux de commande du filtre pour une unité de commande (CU) de filtre dans une seconde station de base radio (2) qui est pourvue d'un filtre réglable (F3,F4,32),
lancer la transmission des signaux de commande du filtre vers l'unité de commande du filtre (CU).

14. Unité de programme selon la revendication 13, moyennant quoi l'unité de programme effectue au moins une étape d'un procédé selon une quelconque des revendications 2 à 4.
